(19) **Europäisches Patentamt / European Patent Office / Office européen des brevets**

(11) **EP 3 226 266 B1**

(12) **EUROPEAN PATENT SPECIFICATION**

(45) Date of publication and mention of the grant of the patent:
**12.12.2018 Bulletin 2018/50**

(51) Int Cl.:
*H01F 27/28* (2006.01)  *H01F 38/14* (2006.01)

(21) Application number: **17153117.1**

(22) Date of filing: **06.05.2013**

(54) **MAGNETIC STRUCTURES FOR LARGE AIR GAP**

MAGNETISCHE STRUKTUREN FÜR GROSSEN LUFTSPALT

STRUCTURES MAGNÉTIQUES POUR GRAND ENTREFER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.05.2012 US 201261642764 P**

(43) Date of publication of application:
**04.10.2017 Bulletin 2017/40**

(62) Document number(s) of the earlier application(s) in accordance with Art. 76 EPC:
**13405058.2 / 2 682 959**

(73) Proprietor: **DET International Holding Limited George Town, Grand Cayman (KY)**

(72) Inventors:
• **Jitaru, Ionel Dan**
  **Tucson, AZ 85718 (US)**
• **Savu, Andrei**
  **Bucharest (RO)**
• **Davila, Marco Antonio**
  **Tucson, AZ 85750 (US)**
• **Radulescu, Andrei Ion**
  **Targoviste Jud. Dambovita (RO)**

(74) Representative: **Keller & Partner Patentanwälte AG**
  **Eigerstrasse 2**
  **Postfach**
  **3000 Bern 14 (CH)**

(56) References cited:
EP-A1- 1 011 187    EP-A2- 1 150 314
WO-A1-95/11545    WO-A1-2012/018268
JP-A- 2004 119 748    US-A1- 2008 296 983
US-A1- 2012 025 605

**EP 3 226 266 B1**

## Description

### 1. Introduction

001 The increasing popularity of wireless power supplies has created a new set of challenges in designing the required power transformers. Large air gaps between primary and secondary decrease the coupling of the power transformer. A decrease in the transformer's coupling translates into a decrease in the overall power converter's efficiency.

002 Large air gaps exhibit a large magnetic path reluctance. Keeping the value of this reluctance small, determined the development of new magnetic structures and wireless power transformers. Also leakage inductance of the transformer increases with the increase of the air gap and the mutual inductance of the transformer decreases. Decreasing the gap reluctance together with minimising the leakage inductance and reducing AC copper loss in the transformer is the main purpose of large air gap magnetic structures.

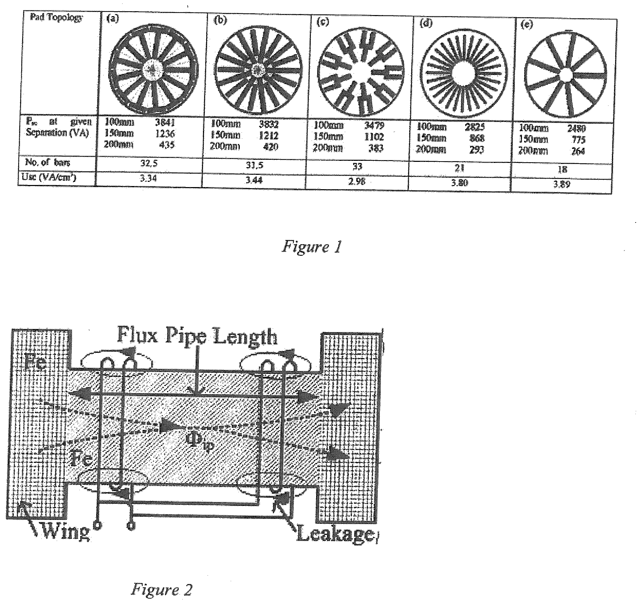

003 This application is accompanied by Figures 1-13 which are reproduced and described in the description that follows.

### 2. Prior Art

004 A method of transferring power at a large distance is defined as Inductive Power Transfer (IPT) which is achieved through mutual coupling in a similar manner to conventional tight coupled transformers. IPT systems have coupling coefficients between 0.01 and 0.5 due to large air gaps compared to over 0.95 in transformers.

005 One of the most important part of an IPT system is the wireless transformer. Magnetic structures for the wireless transformer have been studied by John T. Boys and Grant A. Covic in [1].

006 According to [1] wireless transformers are split in 2 categories: Circular Pads [*Figure 1*] or circular couplers and flat power pads [*Figure 2*]. An investigation and analysis of circular pads is performed by John T. Boys and Grant A. Covic in [2].

007 Circular pads also known as pot core pads are composed of a magnetic material and copper or aluminium coils. Transformer's primary and secondary are identical in shape and size. The drawback of the pot core pads is the fact that high coupling is limited by the distance between the center post and the outer circular post.

008 *Figure 2* shows a flat power pad comprising a ferrite core and two paralell connected windings. The windings are wraped around the ferrite neck. There are two separate zones for the windings. Ferrite extensions called wings are assigned on the outer edges. *Figure 2* shows the primary or secondary of the wireless transformer, where both primary and secondary sides are identical in size and shape.

Document JP 2004 119748 A (Aichi Electric Co Ltd) discloses an assembly for a non-contact power supply to a load, the assembly including a primary and a secondary side unit. Each side comprises an iron core with two legs and a yoke which joins the legs. Windings are wound around the yokes of the primary and the secondary side and plate-like thin bodies made out of magnetic material are integrally attached at end portions of the iron cores in a way that they spread outwards from the respective end faces of the primary side and the secondary side iron core. The side units are arranged in a way that the primary side iron core and the secondary side iron core face each other. Since the area of the end faces is increased, the magnetic resistance is decreased compared to a structure without plates.

Document US 2008/0296983 A1 (Nikon Corporation) D2 discloses an actuator for a magnetic levitation stage apparatus. The apparatus includes a C-core with elongated legs and an I-core, which is arranged under the elongated legs. A single coil is wound on the body portion or around legs of the body portion. When current is provided to coil or an attraction force is applied between the C-core and the I-core. The elongated legs provide efficient lifting force while allowing relatively long travel in a transverse direction.

Document EP 1011 187 A1 (Paul Vahle GmbH) describes a device for wireless transfer of energy to electric consumers with diverging power consumption in series connection, which have to be fed with a constant voltage. In order to increase magnetic coupling between primary and secondary windings the secondary windings of an electric consumer are arranged on a ferrite core.

Document EP 1 150 314 A2 (Mitsubishi Electric Corp) discloses a non-contact signal transmission apparatus that transmits power and signals in non-contact state via electromagnetic induction between a cellular phone and a camera. A main unit is attributed to the cellular phone and an auxiliary unit to the camera. The auxiliary unit includes a pot-type power core having a hollow center and three signal cores being arranged in the hollow center. In use, the position of the auxiliary unit relative to the main unit is adjusted such that its power and signal coils are facing the respective coils of the main unit. When not in use, the power coil and the signal coils 41a, are turned clockwise by 90°.

### Description of the Present Invention

The invention relates to a magnetic structure for a wireless transformer, for inductive power transfer through an air gap. Said magnetic structure includes a primary and a secondary assembly, wherein both assemblies include a first and a second ear and a C-shaped rod linking the first and the second ear. Said C-shaped rod includes a first and a second leg, wherein the first leg is linked to the first ear and the second leg is linked to the second ear. Further, the ears and the C-shaped rod are made of a high permeability magnetic material and the assemblies are configured to be arranged such that the opposing ears define a distance of the air gap and the respective legs of the C-shaped rods are facing each other with respect to the air gap. The invention further relates to a corresponding primary assembly or secondary assembly for a magnetic structure and to a corresponding use of a primary or secondary assembly in a magnetic structure.

By the present invention novel magnetic structures are provided which have an increased power transmission efficiency over a large air gap. The present invention further provides primary or secondary assemblies for such magnetic structures as well as the use of such primary or secondary assemblies in such magnetic structures.

The solution of the invention is specified by the features of apparatus claims 1 and 12 and use claim 13. According to the invention both, the primary and the secondary assembly of the magnetic structure for a wireless transformer, comprise a first winding which is wound on the first leg and which is disposed under the first ear, in order to be shielded from magnetic field lines.

As an example a method of reducing the windings AC impedance of a magnetic structure is provided, the method comprising shielding the winding under the ears formed of magnetic material.

As another example a method of reducing the leakage inductance of a magnetic structure by making ears with cuts is provided, wherein the cuts converge towards the rods, that are used in the formation of the structure.

As a further example a method is provided, which combines the described magnetic structures with different shapes for the primary and the secondary, and which as a result become non symmetrical structures.

Examples of magnetic structures, which are not part of the invention, are a tri-phase large air gap magnetic structure and a multiple-phase large air gap magnetic structure.

### 3. C-shaped Power Pad

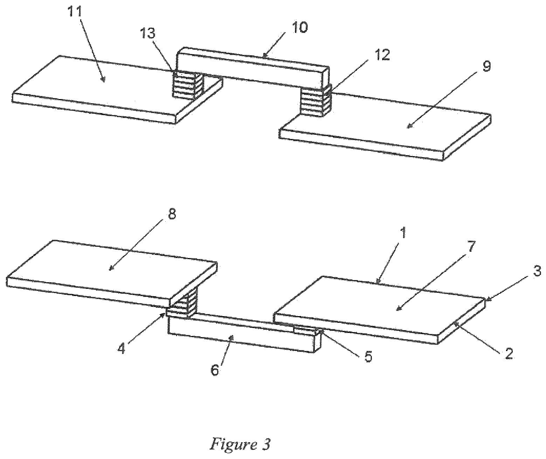

009 *Figure 3* shows an embodiment of the magnetic structure according to the present invention. It comprises of a primary side and a secondary side which are identical in form and size. The primary side includes a rod **6**, and ears **7**, **8** (which are formed of magnetic, e.g. ferrite material) and conductive windings **4**, **5** (e.g. formed of copper).

0010 The two windings are in series creating an "eight shape winding". The windings can be made of regular copper wire or litz wire. Also the shape of the wire can be circular or rectangular.

0011 The rod and ears can be made of any high permeability magnetic material such as si-steel or ferrite.

0012 The distance between primary and secondary assembly is defined as the magnetic air gap. The size of the ears compensate for the high reluctance resulted from a large air gap. The reluctance of the gap is

equal to $\Re_{gap} = \dfrac{l_{gap}}{\mu_{gap} \cdot Area_{gap}}$ where $l_{gap}$ is the gap length, $\mu_{gap}$ is the permeability of the gap and $Area_{gap}$ is the area of the gap. As a result, in order to decrease the gap reluctance we can decrease the length of the gap, increase the gap permeability or increase the area of the gap. The first two options can not be accomplished from a physical point of view. Increasing the area of the gap is the only option left. The gap area is increased by increasing the magnetic ears in two dimensions: **1** and **2**.

0013 The purpose of decreasing the gap reluctance is to force the magnetic field produced by the primary to follow a desired path. Windings **4** and **5** are connected in series forming a magnetic dipole, north and south. The desired path of the magnetic field generated by the primary side is that the field lines travel from ear **8** in the rod **6**, into the ear **7**, through the air gap into the secondary ear **9**, through the secondary rod **10**, through the secondary ear **11**, through the air gap and back into the primary ear **8**. The secondary windings **12** and **13** are energized by this magnetic field.

0014 Another advantage obtained by using magnetic ears in this C-shaped Power Pad is the fact that the windings **4**, **5**, **12**, **13** are shielded from the magnetic field lines. In this shielding case the winding AC loss is reduced resulting in a higher system efficiency.

0015 High coupling is obtained if all the magnetic field lines follow the path described above. There are some drawbacks because not all the field lines couple to the secondary. The lines which couple to the secondary are called mutual lines and form the mutual inductance, and the lines which do not couple to the secondary are called leakage lines and form the leakage inductance.

0016 Using the ears decreases the gap reluctance but also creates two leakage paths in the primary side. One leakage path is created between the ears **7** and **8**. A second path is created between each ear **7**, **8** and the rod **6**. The permeability of the rod can be different from the permeability of the ears.

### 4. C-shaped Power Pad with single leg winding.

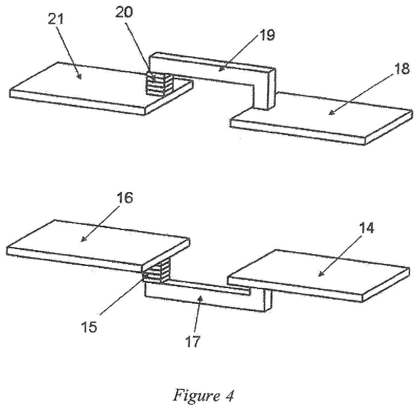

0017 *Figure 4* shows another embodiment of this invention. The magnetic structure comprises of two primary and secondary assemblies identical in shape and size. It is similar to the C-shaped Power Pad the only difference is that the winding is compacted onto a single leg. The reluctance analysis is the same as the C-shaped Power Pad.

0018 The ideal magnetic path is through rod **17**, ear **14**, air gap, ear **18**, rod **19**, rod **21**, air gap and ear **16**. Leakage field lined exist between ear **14** and **16** and between ear **16** to rod **17**.

0019 The advantage of this design is that leakage flux from ear **14** to rod **17** is not existent because the winding does not exist in the leg below ear **14**.

## 5. C-shaped Power Pad with center rod winding

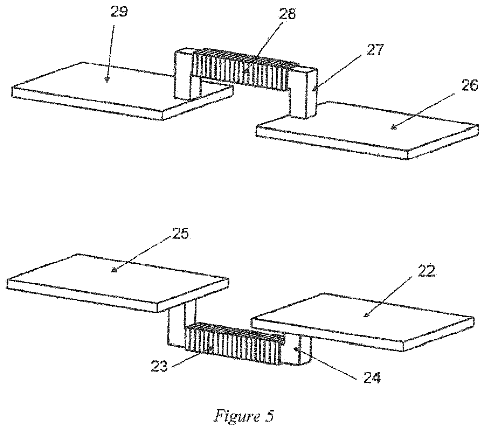

0020 *Figure 5* shows an example of a magnetic structure not being part of the invention. The magnetic structure comprises of two primary and secondary assemblies identical in shape and size. It is similar to the C-shaped Power Pad, the only difference is that the winding is compacted on the rods **24** and **28**.

0021 The desired path of the magnetic field is through rod **24** through ear **22**, through the air gap through ear **26** through rod **27** through ear **29**, through the air gap and through ear **25**.

0022 The advantage of using the windings **23** and **28** on the rods **24** and **27** is that the undesired leakage flux between the ears and the rod does not exist anymore. The disadvantage is that the winding arrangement creates leakage flux on the opposite side of the gap.

## 6. C-shaped Power Pad with center rod winding and circular rod

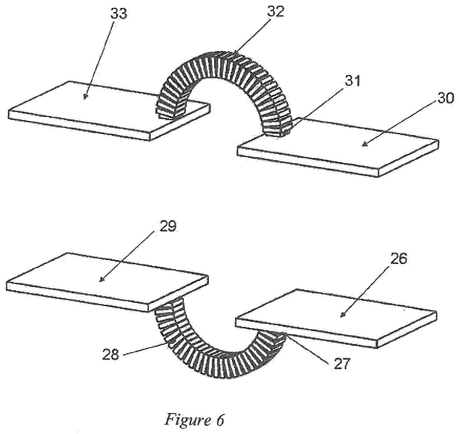

*0023 Figure 6 shows* another example of a magnetic structure not being part of the invention. The magnetic structure comprises of two primary and secondary assemblies identical in shape and size. It is similar to the C-shaped Power Pad with center rod winding. The difference is that the rods **27** and **31** have a circular shape.

*0024* The desired path of the magnetic field is from rod **28** to ear **26**, through the air gap, through ear **30**, through rod **31**, through ear **33**, through the air gap and through ear **29**.

*0025* The advantage of this concept is the minimisation of the rods **27** and **31** reluctances by decreasing the average length of the rod using a circular shape.

## 7. C-shaped Power Pad with magnetic material cutouts

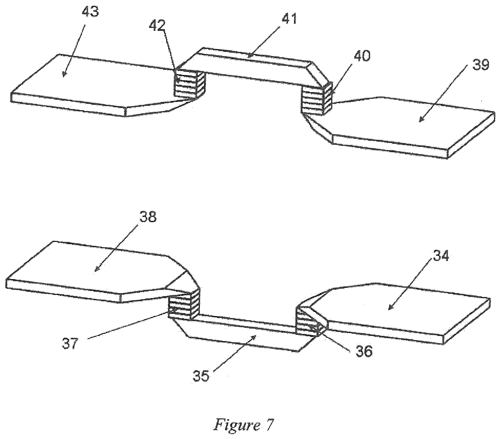

0026 Figure 7 shows another embodiment of the invention. The magnetic structure comprises of two primary and secondary assemblies identical in shape and size.

It is similar to the C-shaped Power Pad. There are cutouts in the rods **35** and **41** and in the ears **34**, **38**, **39** and **43**.

*0027* The desired magnetic flux path is through rod **35**, through ear **34**, through the air gap, through ear **39**, through rod **41**, through ear **43**, through the air gap, through ear **38**.

*0028* The advantage of this design is that the magnetic material cutouts decrease the leakage flux line between the ears **34**, **38**, and **39**, **43**. It also decreases the leakage field lines between the ears **34**, **38** and the rod **35**, and between the ears **39** and **43** and the rod **41**.

## 8. Symmetrical Power Pad

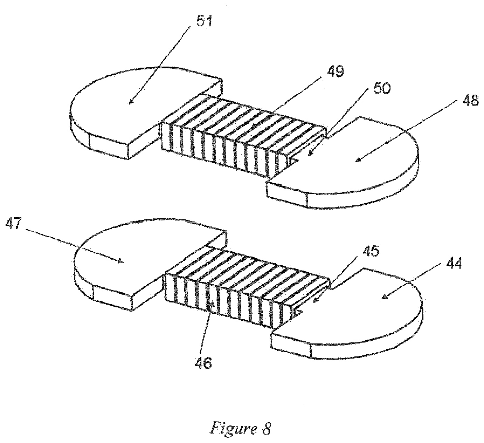

*0029 Figure 8 shows* another example of a magnetic structure not being part of the invention. The magnetic structure comprises of two primary and secondary assemblies identical in shape and size.

*0030* The primary and secondary are made of magnetic material, ferrite or si-steel, and a copper winding. The ferrite is split between two sections: the ears **44**, **47** and **48**, **51** and the rods **45**, **50**.

*0031* The windings **46**, **49** are spread on the entire length of the ferrite rods **45**, **50**. The ferrite ears play the same role of decreasing the air gap reluctance like the C-shaped Power Pad.

*0032* The desired magnetic field path is from rod **45** through ear **44**, through the air gap, through ear **48**, through rod **50**, through ear **51**, through the air gap and through ear **47**.

0033 A disadvantage of this winding arrangement is that the windings **46** and **49** are not shielded from the magnetic field in any way, and as a result they will exhibit a high AC impedance. This will lower the system efficiency.

*0034* This arrangement creates a leakage field between ears **44** and **47** and between ears **48** and **51**. This leakage field has three components: above the plane of the ears, below the plane of the ears and in the plane of the ears. Because the structure is symmetrical, the leakage field below the plane of the ears will be as intense as the leakage field above the place of the ears.

*0035* The placement of the windings **46** and **49** makes them closer to each other, and as a result some of the leakage field produced by winding **46** could be captured by secondary winding **49**.

## 9. Symmetrical Power Pad with ferrite cuts

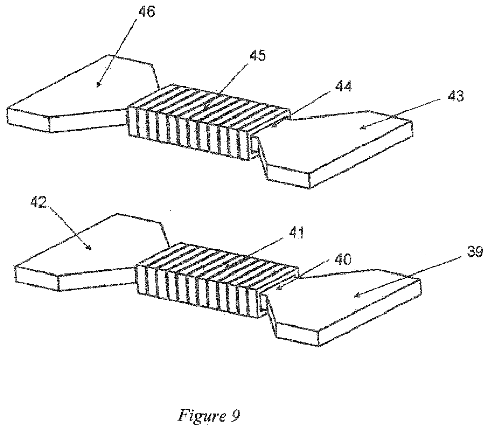

0036 *Figure 9* shows another example of a magnetic structure not being part of the invention. The magnetic structure comprises of two primary and secondary assemblies identical in shape and size. The structure is similar to the Symmetrical Power Pad. The difference is that the ears **39**, **42**, **43** and **46** have cuts which converge toward the rods **40**,**44**.

0037 The desired magnetic field path is from rod **40** through ear **39**, through the air gap, through ear **43**, through rod **44**, through ear **46**, through the air gap, through ear **42**.

0038 The advantage of this concept is that the leakage lines from the plane of ears **39**, **42** and **43**, **46** is minimised due to effective distance increase between them by the cuts which converge toward the rods **40**, **44**.

## 10. Linear Power Pad

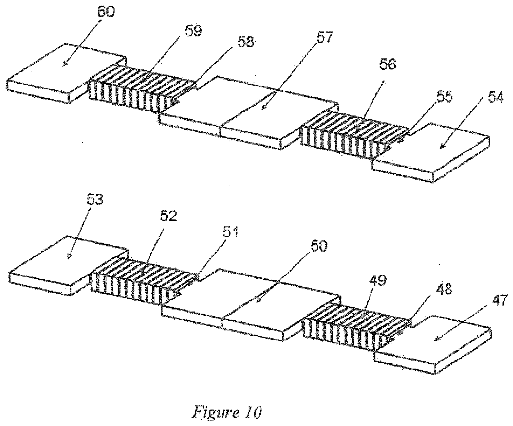

0039 *Figure 10* shows a further example of a magnetic structure not being part of the invention. The magnetic structure comprises of two primary and secondary assemblies identical in shape and size. The primary and secondary assemblies are made from magnetic material and copper windings. Each primary and secondary is made out of two windings **49**, **52**, **56**, **59**, two ferrite ears **47**, **53**, **54**, **60**, two ferrite rods **48**, **51**, **55**, **58** and one center ferrite pad **50**, **57**.

0040 Windings **49** and **52** have the polarity set that the magnetic field produced travels towards the center pad **50**. For the primary side the center ferrite pad **50** becomes a magnetic field transmitter and the two outer ears **47** and **53** are the magnetic field return paths.

0041 The desired magnetic field path from primary to secondary is: field is created by windings **49** and **52**, travels from rods **48** and **51** through center pad **50**, through the air gap, through center pad **57**, it is split between rod **55** and rod **58**, each split travels through ear **54** respectively ear **60**, then through the air gap, an each split travels through return ears **47** respectively **53**.

0042 The advantage of this arrangement is that the air gap reluctance of the center pads **50**, **57** is minimized due to the increase in the pads area. The total magnetic field is split between the windings **49**, **52** and **56**, **59**. Unwanted Leakage field lines on the back side on the primary exist because of the structure primary symmetry.

**11. E-shaped Power Pad**

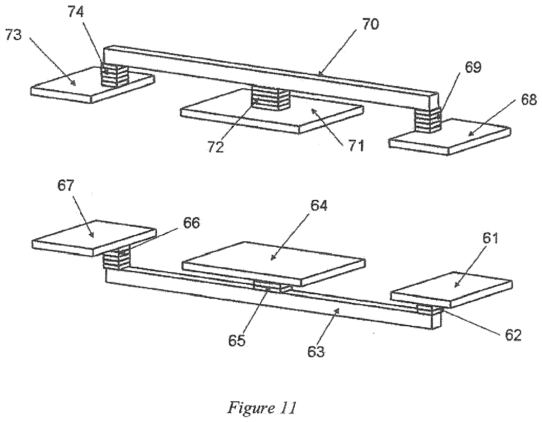

0043 *Figure 11* shows a further embodiment of the invention. The magnetic structure comprises of two primary and secondary assemblies identical in shape and size, but also can be combined with all the magnetic structures described here, and as a result will become non symmetrical primaries and secondaries.

0044 The primary and the secondary assemblies are made of magnetic material and copper windings. The primary and secondary windings are split on three legs. The polarity of winding **65** is set that the magnetic field created is orientated towards center pad **64**. Windings **62** and **66** have the polarity that the magnetic field enters the rod **63**. The same winding polarity is se for the secondary side.

0045 The desired path for the magnetic field is from center pad 64, through the air gap, through center pad 71, split into the rod 70, half of the magnetic field goes into ear **68**, through the air gap, through ear **61**, through rod **63**, and the other half through ear **73**, through the air gap, through ear **67** and through rod **63**.

0046 The advantage of this structure is that it minimizes the leakage lines between ears **61**, **67** and between ears **68** and **73**. Also splitting the winding into three separate sections makes the windings better shielded against the magnetic field lines. As a result, the AC impedance of the windings is reduced, resulting in a higher system efficiency.

0047 A drawback of this assembly is that the center pad **64** has a low reluctance path to rod **63**, and as a result creates unwanted leakage lines to rod **63**.

**12. Delta shaped power pad**

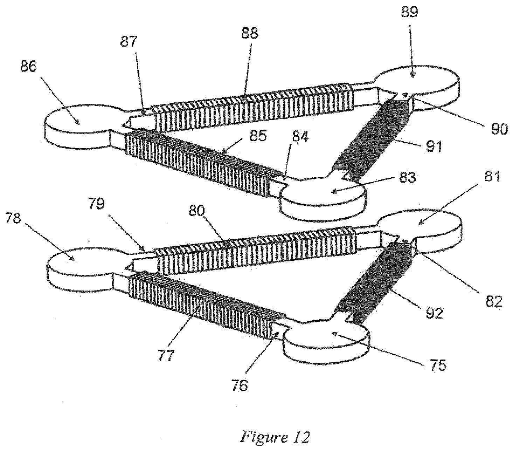

*0048 Figure 12* shows another example of the magnetic structure not being part of the invention. The magnetic structure comprises of two primary and secondary assemblies identical in shape and size, but also can be combined with all the magnetic structures described here, and as a result will become non symmetrical primaries and secondaries. The structure can have also a C-shape connection between ears.

*0049* The primary and secondary are made of magnetic material and copper windings. The magnetic material is made up of magnetic ears **75**, **78**, **81**, **83**, **89**, **86**, and magnetic rods **76**, **82**, **79**, **84**, **87**, **90**.

*0050* There are three windings in the primary side **77**, **92**, **80** and three windings in the secondary side **85**, **88**, **91**. The primary windings can be energized with 120 degree separation in phase.

0051 At zero degree phase ears **86** and **78** will be the field return path and ears **75**, **83**, **81**, **89** will be the transmission path. The path of the magnetic field at zero phase will be: from ear **78** will split to rod **76** and rod **79**. From rod **76** will go to ear **75**, through the air gap, through ear **83** through rod **84**, through ear **86**, through the air gap and back to ear **78**. From rod **79** will go to ear **81**, through the air gap, through ear **89**, through rod **87**, through ear **86**, through the air gap and back to ear **78**. At 120 degree phase ears **75** and **83** will be the field return path and ears **78**, **81**, **86**, **89** will be the field transmission path. At 240 degree phase ears **81** and **89** will be the field return path and ears **78**, **83**, **86**, **75** will be the field transmission path. This tri-phase system creates a rotational magnetic field between all ears.

*0052* The drawback of this assembly is that the symmetry of the primary creates unwanted leakage lines below the plane of the ears. Also the symmetry of the secondary creates unwanted leakage lines below the plane of the ears.

*0053* The windings can be arranged into multiple phases similar to the electric motors phases.

**13. Y-shaped Power Pad**

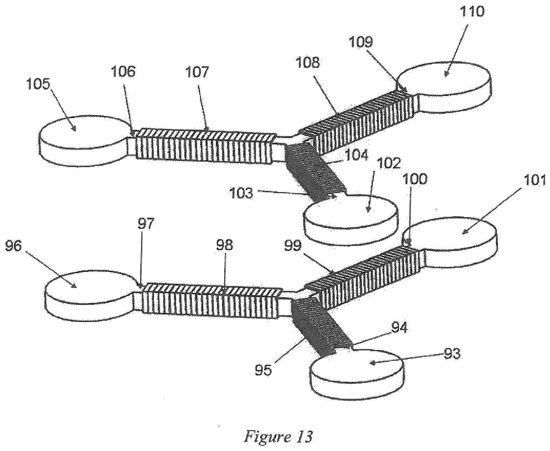

*0054* Figure 13 shows a further example of a magnetic structure not being part of the invention. The magnetic structure comprises of two primary and secondary assemblies identical in shape and size, but also can be combined with all the magnetic structures described here, and as a result will become non symmetrical primaries and secondaries. The structure can have also a C-shape connection between ears

*0055* The primary and secondary are made of magnetic material and copper windings. The magnetic material is made up of magnetic ears **93**, **96**, **101**, **102**, **110**, **105**, and magnetic rods **94**, **97**, **100**, **103**, **106**, **109**.

*0056* There are three windings in the primary side **95**, **98**, **99** and three windings in the secondary side **107**, **104**, **108**. The primary windings can be energized with 120 degree separation in phase.

0057 At zero degree phase the magnetic field wil travel from ear **96** through rod **97**, through rod **94**, through ear **93**, through the air gap, through ear **102**, through rod **103**, through rod **106**, through ear **105**, through the air gap and back to ear **96**. This tri-phase system creates a rotational magnetic field between all ears. At 120 degree phase the magnetic field will travel from ear **93** through rod **94**, through rod **100**, through ear **101**, through the air gap, through ear **110**, through rod **109**, through rod **100**, through ear **101**, through the air gap, through ear **110**, through rod **109**, through rod **103**, through ear **102**, through the air gap and back to rod **93**. At 240 degree phase the magnetic field will travel from ear **101** through rod **100**, through rod **97**, through ear **96**, through the air gap, through the ear **105**, through the rod **106**, through the rod **109**, and back to ear **110**. This tri-phase system creates a rotational magnetic field between all ears.

0058 The drawback of this assembly is that the symmetry of the primary creates unwanted leakage lines below the plane of the ears. Also the symmetry of the secondary creates unwanted leakage lines below the plane of the ears.

0059 The windings can be arranged into multiple phases similar to the electric motors phases.

## 14. Summary

Thus, as seen from the foregoing description, one feature of the present invention is that the magnetic structures are configured to help minimize the air gap reluctance, improving the magnetic structure's coupling coefficient. Another feature is that reducing the windings AC impedance of a magnetic structure is produced by shielding the winding under ears formed of magnetic material. Still another feature is that leakage inductance of a magnetic structure is reduced, by making ears with cuts which converge toward the magnetic rods that are used in the formation of the structure.

## References

[1] Budhia, M.; Boys, J.; Covic, G.; Huang, C. "Development of a single-sided flux magnetic coupler for electric vehicle IPT charging systems", Industrial Electronics, IEEE Transactions on, Volume: PP , Issue: 99 , Publication Year: 2011 , Page(s): 1-1.
[2] Budhia, M.; Boys, J.; Covic, "Design and optimisation of Circular Magnetic Structures for Lumped Inductive Power Transfer Systems", Power Electronics, IEEE Transactions on, Volume: 26 , Issue: 11 , Publication Year: 2011 , Page(s): 3096 - 3108.

## Claims

1. Magnetic structure for a wireless transformer, for inductive power transfer through an air gap, the magnetic structure including a primary and a secondary assembly,

   a) wherein both assemblies include a first and a second ear (7, 8, 9, 11) and a C-shaped rod (6, 10) linking the first and the second ear (7, 8, 9, 11),
   b) wherein the C-shaped rod (6, 10) includes a first and a second leg, the first leg being linked to the first ear (7, 9) and the second leg being linked to the second ear (8, 11),
   c) wherein the ears and the C-shaped rod (6,10) are made of a high permeability magnetic material,
   d) and wherein the assemblies are configured to be arranged such that the opposing ears (7, 8, 9, 11) define a distance of the air gap and the respective legs of the C-shaped rods (6, 10) are facing each other with respect to the air gap, **characterized in that**
   e) each assembly comprises a first winding (5, 12) wound on the first leg and disposed under the first ear (8, 11) in order to be shielded from magnetic field lines.

2. Magnetic structure according to claim 1, wherein the ears (34, 38, 39, 43) have cutouts which converge toward the rods (35, 41).

3. Magnetic structure according to claim 2, wherein the ears and the rods have cutouts which decrease a leakage flux between the ears (34, 38, 39, 43) and between the ears (34, 38, 39, 43) and the rod (35, 41) of the respective assembly.

4. Magnetic structure according to any of the precedent claims, wherein the permeability of the rod is different from the permeability of the ears.

5. Magnetic structure according to any of the precedent claims, wherein the high permeable magnetic material is a ferrite material or si-steel.

6. Magnetic structure according to any of the precedent claims, wherein each assembly comprises a second winding (4, 13) which is wound on the second leg and disposed under the second ear (7, 9) in order to be shielded from the magnetic field lines.

7. Magnetic structure according to claim 6, wherein the two windings (4, 5) of the primary assembly are connected in series.

8. Magnetic structure according to claim 7, wherein the two windings (4, 5) form an eight shape winding.

9. Magnetic structure according to any of the precedent claims, wherein the windings are made out of copper wire or litz wire and/or wherein the shape of the wire is circular or rectangular.

10. Magnetic structure according to claim 6, wherein the primary and/or the secondary assembly comprises a center ear (64) and wherein the rod (63) includes a center leg to form an E-shaped rod, the third leg linking the center ear (64) to the first ear (61) and the second ear (67), a center winding (65) being arranged on the center leg, the center winding (65) having a polarity opposite to the polarity of the first and the second winding (62, 66, 69, 74).

11. Magnetic structure according to any of the precedent claims, wherein the primary side and the secondary side are identical in shape and size.

12. Use of a primary assembly or a secondary assembly in a magnetic structure according to any of the claims 1 - 11, wherein said assembly includes a first and a second ear (7, 8, 9, 11) and a C-shaped rod (6, 10) linking the ears (7, 8, 9, 11), wherein the ears (7, 8, 9, 11) and the C-shaped rod (6,10) are made of a high permeability magnetic material and wherein the C-shaped rod (6,10) includes a first and a second leg, the first leg being linked to the first ear (7, 9) and the second leg being linked to the second ear (8, 11), wherein the assembly comprises a first winding (5, 12) which is wound on the first leg and disposed under the first ear (7, 9) in order to be able to be shielded from magnetic field lines.

**Patentansprüche**

1. Magnetstruktur für einen drahtlosen Transformator zur induktiven Energieübertragung durch einen Luftspalt, wobei die Magnetstruktur eine primäre und eine sekundäre Baugruppe umfasst,

a) wobei beide Baugruppen ein erstes und ein zweites Ohr (7, 8, 9, 11) und einen C-förmigen Stab (6, 10) umfassen, der das erste und das zweite Ohr (7, 8, 9, 11) verbindet,
b) wobei der C-förmige Stab (6, 10) einen ersten und einen zweiten Schenkel umfasst, wobei der erste Schenkel mit dem ersten Ohr (7, 9) verbunden ist, und wobei der zweite Schenkel mit dem zweiten Ohr (8, 11) verbunden ist,
c) wobei die Ohren und der C-förmige Stab (6, 10) aus einem Magnetmaterial hoher Permeabilität hergestellt sind,
d) und wobei die Baugruppen dafür ausgelegt sind, derart angeordnet zu werden, dass die einander gegenüberliegenden Ohren (7, 8, 9, 11) einen Abstand des Luftspaltes definieren, und die jeweiligen Schenkel der C-förmigen Stäbe (6, 10) in Bezug auf den Luftspalt einander zugewandt sind,
**dadurch gekennzeichnet, dass**
e) jede Baugruppe eine erste Wicklung (5, 12) umfasst, die auf den ersten Schenkel gewickelt und unter dem ersten Ohr (8, 11) angeordnet ist, um gegenüber Magnetfeldlinien abgeschirmt zu werden.

2. Magnetstruktur nach Anspruch 1, wobei die Ohren (34, 38, 39, 43) Aussparungen haben, die zu den Stäben (35, 41) hin konvergieren.

3. Magnetstruktur nach Anspruch 2, wobei die Ohren und die Stäbe Aussparungen haben, die einen Streufluss zwischen den Ohren (34, 38, 39, 43) und zwischen den Ohren (34, 38, 39, 43) und dem Stab (35, 41) der jeweiligen Baugruppe verringern.

4. Magnetstruktur nach einem der vorherigen Ansprüche, wobei die Permeabilität des Stabes sich von der Permeabilität der Ohren unterscheidet.

5. Magnetstruktur nach einem der vorherigen Ansprüche, wobei das hoch permeable Magnetmaterial ein Ferritmaterial oder Si-Stahl ist.

6. Magnetstruktur nach einem der vorherigen Ansprüche, wobei jede Baugruppe eine zweite Wicklung (4, 13) umfasst, die auf den zweiten Schenkel gewickelt und unter dem zweiten Ohr (7, 9) angeordnet ist, um gegenüber den Magnetfeldlinien abgeschirmt zu werden.

7. Magnetstruktur nach Anspruch 6, wobei die zwei Wicklungen (4, 5) der primären Baugruppe in Reihe geschaltet sind.

8. Magnetstruktur nach Anspruch 7, wobei die zwei Wicklungen (4, 5) eine achtförmige Wicklung bilden.

9. Magnetstruktur nach einem der vorherigen Ansprüche, wobei die Wicklungen aus Kupferdraht oder Litze hergestellt sind und/oder wobei die Form des Drahtes kreisförmig oder rechteckig ist.

10. Magnetstruktur nach Anspruch 6, wobei die primäre und/oder die sekundäre Baugruppe ein mittleres Ohr (64) umfasst und wobei der Stab (63) einen mittleren Schenkel umfasst, um einen E-förmigen Stab zu bilden, wobei der dritte Schenkel das mittlere Ohr (64) mit dem ersten Ohr (61) und dem zweiten Ohr (67) verbindet, wobei eine mittlere Wicklung (65) auf dem mittleren Schenkel angeordnet ist, wobei die mittlere Wicklung (65) eine entgegengesetzte Polarität zur Polarität der ersten und der zweiten Wicklung (62, 66, 69, 74) hat.

**11.** Magnetstruktur nach einem der vorherigen Ansprüche, wobei die Primärseite und die Sekundärseite in Form und Größe identisch sind.

**12.** Verwendung einer primären Baugruppe oder einer sekundären Baugruppe in einer Magnetstruktur nach einem der Ansprüche 1-11, wobei die Baugruppe ein erstes und ein zweites Ohr (7, 8, 9, 11) und einen C-förmigen Stab (6, 10) umfasst, der die Ohren (7, 8, 9, 11) verbindet, wobei die Ohren (7, 8, 9, 11) und der C-förmige Stab (6, 10) aus einem Magnetmaterial hoher Permeabilität hergestellt sind und wobei der C-förmige Stab (6, 10) einen ersten und einen zweiten Schenkel umfasst, wobei der erste Schenkel mit dem ersten Ohr (7, 9) verbunden ist, und wobei der zweite Schenkel mit dem zweiten Ohr (8, 11) verbunden ist, wobei die Baugruppe eine erste Wicklung (5, 12) umfasst, die auf den ersten Schenkel gewickelt und unter dem ersten Ohr (7, 9) angeordnet ist, um gegenüber Magnetfeldlinien abgeschirmt werden zu können.

**Revendications**

**1.** Structure magnétique pour un transformateur sans fil, pour le transfert inductif d'énergie à travers un entrefer, la structure magnétique comportant un ensemble primaire et secondaire,

> a) dans laquelle les deux ensembles comportent une première et une deuxième oreille (7, 8, 9, 11) et une tige en forme de C (6, 10) reliant la première et la deuxième oreille (7, 8, 9, 11),
> b) dans laquelle la tige en forme de C (6, 10) comporte une première et une deuxième patte, la première patte étant reliée à la première oreille (7, 9) et la deuxième patte étant reliée à la deuxième oreille (8, 11),
> c) dans laquelle les oreilles et la tige en forme de C (6, 10) sont constituées d'un matériau magnétique de forte perméabilité,
> d) et dans laquelle les ensembles sont configurés pour être agencés de telle sorte que les oreilles opposées (7, 8, 9, 11) définissent une distance de l'entrefer et les pattes respectives des tiges en forme de C (6, 10) se font face par rapport à l'entrefer,
> **caractérisée en ce que**
> e) chaque ensemble comprend un premier enroulement (5, 12) enroulé sur la première patte et disposé sous la première oreille (8, 11) afin d'être protégé de lignes de champ magnétique.

**2.** Structure magnétique selon la revendication 1, dans laquelle les oreilles (34, 38, 39, 43) ont des découpes qui convergent vers les tiges (35, 41).

**3.** Structure magnétique selon la revendication 2, dans laquelle les oreilles et les tiges ont des découpes qui réduisent un flux de fuite entre les oreilles (34, 38, 39, 43) et entre les oreilles (34, 38, 39, 43) et la tige (35, 41) de l'ensemble respectif.

**4.** Structure magnétique selon l'une quelconque des revendications précédentes, dans laquelle la perméabilité de la tige est différente de la perméabilité des oreilles.

**5.** Structure magnétique selon l'une quelconque des revendications précédentes, dans laquelle le matériau magnétique fortement perméable est un matériau à base de ferrite ou un acier au Si.

**6.** Structure magnétique selon l'une quelconque des revendications précédentes, dans laquelle chaque ensemble comprend un deuxième enroulement (4, 13) qui est enroulé sur la deuxième patte et disposé sous la deuxième oreille (7, 9) afin d'être protégé des lignes de champ magnétique.

**7.** Structure magnétique selon la revendication 6, dans laquelle les deux enroulements (4, 5) de l'ensemble primaire sont branchés en série.

**8.** Structure magnétique selon la revendication 7, dans laquelle les deux enroulements (4, 5) forment un enroulement en forme de huit.

**9.** Structure magnétique selon l'une quelconque des revendications précédentes, dans laquelle les enroulements sont constitués de fil de cuivre ou de fil de Litz et/ou dans laquelle la forme du fil est circulaire ou rectangulaire.

**10.** Structure magnétique selon la revendication 6, dans laquelle l'ensemble primaire et/ou secondaire comprend une oreille centrale (64) et dans laquelle la tige (63) comporte une patte centrale pour former une tige en forme de E, la troisième patte reliant l'oreille centrale (64) à la première oreille (61) et la deuxième oreille (67), un enroulement central (65) étant disposé sur la patte centrale, l'enroulement central (65) ayant une polarité opposée à la polarité du premier et du deuxième enroulement (62, 66, 69, 74).

**11.** Structure magnétique selon l'une quelconque des revendications précédentes, dans laquelle le côté primaire et le côté secondaire sont identiques en forme et en taille.

**12.** Utilisation d'un ensemble primaire ou d'un ensemble secondaire dans une structure magnétique selon l'une quelconque des revendications 1 à 11, ledit ensemble comportant une première et une deuxième oreille (7, 8, 9, 11) et une tige en forme de C (6, 10) reliant les oreilles (7, 8, 9, 11), les oreilles (7, 8, 9, 11) et la tige en forme de C (6, 10) étant constituées d'un matériau magnétique de forte perméabilité et la tige en forme de C (6, 10) comportant une première et une deuxième patte, la première patte étant reliée à la première oreille (7, 9) et la deuxième patte étant reliée à la deuxième oreille (8, 11), l'ensemble comprenant un premier enroulement (5, 12) qui est enroulé sur la première patte et disposé sous la première oreille (7, 9) afin de pouvoir être protégé de lignes de champ magnétique.

| Pad Topology | (a) | | (b) | | (c) | | (d) | | (e) | |
|---|---|---|---|---|---|---|---|---|---|---|
| P$_{sc}$ at given Separation (VA) | 100mm | 3841 | 100mm | 3832 | 100mm | 3479 | 100mm | 2825 | 100mm | 2480 |
| | 150mm | 1236 | 150mm | 1212 | 150mm | 1102 | 150mm | 868 | 150mm | 775 |
| | 200mm | 435 | 200mm | 420 | 200mm | 383 | 200mm | 293 | 200mm | 264 |
| No. of bars | 32,5 | | 31,5 | | 33 | | 21 | | 18 | |
| Usc (VA/cm²) | 3.34 | | 3.44 | | 2.98 | | 3.80 | | 3.89 | |

Figure 1

Figure 2

*Figure 3*

*Figure 4*

Figure 5

Figure 6

*Figure 7*

*Figure 8*

Figure 9

Figure 10

Figure 11

Figure 12

*Figure 13*

**EP 3 226 266 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004119748 A
- US 20080296983 A1
- EP 1011187 A1
- EP 1150314 A2

**Non-patent literature cited in the description**

- **BUDHIA, M. ; BOYS, J. ; COVIC, G. ; HUANG, C.** Development of a single-sided flux magnetic coupler for electric vehicle IPT charging systems. *Industrial Electronics, IEEE Transactions on,* 2011, vol. PP (99), 1-1
- **BUDHIA, M. ; BOYS, J. ; COVIC.** Design and optimisation of Circular Magnetic Structures for Lumped Inductive Power Transfer Systems. *Power Electronics, IEEE Transactions on,* 2011, vol. 26 (11), 3096-3108